# EUROPEAN PATENT SPECIFICATION

(11) **EP 0 370 162 B1**
(45) Date of publication and mention of the grant of the patent: **28.06.1995**
(21) Application number: 89106624.3
(22) Date of filing: 13.04.1989
(51) Int. Cl.: G01F 1/68

(54) **Method and apparatus for measuring and controlling a fluid flow rate**
Verfahren und Vorrichtung zum Messen und Steuern eines Flüssigkeitsdurchflusses
Méthode et appareil de mesure et de commande de débit de fluide

(30) Priority: 22.11.1988 JP 295261/88
(43) Date of publication of application: 30.05.1990
(73) Proprietor: STEC INC., Kyoto (JP)
(72) Inventor: Ishikawa, Kouichi, Fushimi-ku Kyoto, 621 (JP); Mihira, Hiroshi, Fushimi-ku Kyoto, 621 (JP); Kimura, Noriyuki, Ukyo-ku Kyoto, 615 (JP); Yamaguchi, Masao, Minami-ku Kyoto, 601 (JP)
(74) Representative: TER MEER STEINMEISTER & PARTNER GbR

(56) References cited:
- EP-A- 0 180 974
- EP-A- 0 203 622
- EP-A- 0 271 660
- DE-A- 1 573 028
- FR-A- 2 445 516
- US-A- 4 199 981
- US-A- 4 354 504

## Description

### BACKGROUND OF THE INVENTION

### Field of the Invention

The present invention relates to a method and apparatus for measuring a flow rate of a fluid, such as liquid and gas, in particular to a method and apparatus suitable for measuring and controlling a very small flow rate of a liquid.

### Description of the Prior Art

Several methods for measuring a very small flow rate of for example a liquid are known.
1. A method, in which a liquid is introduced into a vessel for an appointed time and a flow rate is determined on the basis of the weight of the liquid.
2. A method, in which a flow rate is determined on the basis of the time of filling up a liquid in a vessel having a known volume.
3. A method using a rotor wheel and the like.
4. A method, in which a thermal sensor or a pressure sensor is disposed in a passage and the flow rate is determined from the velocity of flow.
5. A method, in which a heater is wound around a tube, through which a liquid passes, and the flow rate is determined on the basis of the temperature of the heater itself and before and after the heater.

However, the above mentioned methods have the following disadvantages:
- In applying the methods of 1 and 2 it is not possible to carry out a measurement in line and of an instantaneous flow rate.
- With the method of 3 it is difficult to measure a very small flow rate on account of the size of the rotor wheel.
- The method 4 has problems with the shield of a sensor portion and with the material of a liquid junction portion.
- With the method 5, the sensitivity of measurement is insufficient and bubbles are generated when the liquid is heated by means of the heater, and furthermore the method is unsuitable for the measurement of low-boiling point liquids.

FR-A-2 445 516 discloses a method and an apparatus for measuring a flow rate of a fluid. The apparatus comprises:
- a tube through which the fluid passes;
- cooling means attached to the tube
- a first temperature sensor which measures the temperature of the fluid prior to the passage through the tube;
- a second temperature sensor which measures the temperature of the fluid after the passage through the tube;
- a means for measuring the change of heat during the passage of the fluid through the tube; and
- calculator means for determining the flow rate by using the measured temperatures and the measured loss of heat.

This known method and apparatus have the disadvantage that the means for measuring of the loss of heat are relatively expensive. In addition, the sensors for measuring the temperature of the fluid are in direct contact with the fluid which may cause problems if the flow of corrosive fluids is to be measured. It is also known from EP-A-0 180 974 and DE-A-1 573 028 to use a cooling means is similar flow rate meters.

It is an object of the invention to provide a method, a flow meter and an apparatus, providing a high accuracy of measurement simultaneously avoiding all the above described disadvantages of prior art methods.

### SUMMARY OF THE INVENTION

A method according to the invention for measuring flow rate of a fluid which passes through a tube which is cooled by an electronic cooling element comprises the steps of measuring a first temperature of a surface of said cooled tube upstream of said cooled portion, measuring a second temperature of a surface of said cooling element, measuring a third temperature of a surface of the tube cooled by means of said cooling element, controlling said cooling element electronically such that the difference between the first temperature and the second temperature is kept at an appointed value, and measuring the flow rate passing through that tube on the basis of the difference between the third temperature and the second temperature.

A flow meter according to the present invention comprises a portion of a tube through which a fluid passes, an electronic cooling element mounted on the tube, and a first and a second temperature-detecting element, said cooling element being an electronically controlled cooling element, said first temperature-detecting element is mounted on a surface of said tube upstream of said cooled portion of the tube, said second temperature-detecting element is mounted on a surface of said cooling element, a third temperature-detecting element is mounted on said surface of the tube cooled by means of the cooling element, and the flow rate of the fluid passing through said tube is measured on the basis of the difference between the temperature detected by said third temperature-detecting element and the temperature detected by said second temperature-detecting element, and in that said cooling element is controlled electronically such that the difference between the temperature detected by said first temperature-detecting element and the temperature detected by the second temperature-detecting element is kept at an appointed value.

Furthermore, an apparatus for controlling the flow rate of a liquid according to the present invention comprises a liquid tank, means for discharging the liquid from said liquid tank, a flow meter disposed in a passage from said liquid tank and a valve arranged downstream of said flow meter, and is characterized in that an electronic cooling element is associated with said flow meter for cooling a portion of a tube, through which the liquid passes, a first temperature-detecting element is mounted on a surface of said tube upstream of said cooled portion of the tube, a second temperature-detecting element is mounted on a surface of said cooling element, a third temperature-detecting element is mounted on said surface of the tube cooled by means of said cooling element, the flow rate of the liquid passing through said tube is determined on the basis of the difference between the temperature detected by said third temperature-detecting element and the temperature detected by said second temperature-detecting element, and in that said cooling element is controlled electronically such that the difference between the temperature detected by said first temperature-detecting element and the temperature detected by the second temperature-detecting element is kept at an appointed value, and the opening of said valve is controlled by a signal from said flow meter to supply the liquid in an appointed flow rate.

### BRIEF DESCRIPTION OF THE DRAWINGS

One preferred embodiment of the present invention is shown in the drawings, in which
- **Fig.1**: is a diagram showing the flow of a fluid supplied from a liquid tank;
- **Fig.2**: is a partially sectioned front view showing principal parts of an apparatus for controlling the flow rate of a fluid;
- **Fig.3**: is a disintegrated perspective view of a flow meter;
- **Fig.4**: is an enlarged perspective view showing principal parts of the flow meter; and
- **Fig.5**: is a block diagram of an electric system.

### DESCRIPTION OF THE PREFERRED EMBODIMENT

The preferred embodiment of the present invention will be described below with reference to the drawings.

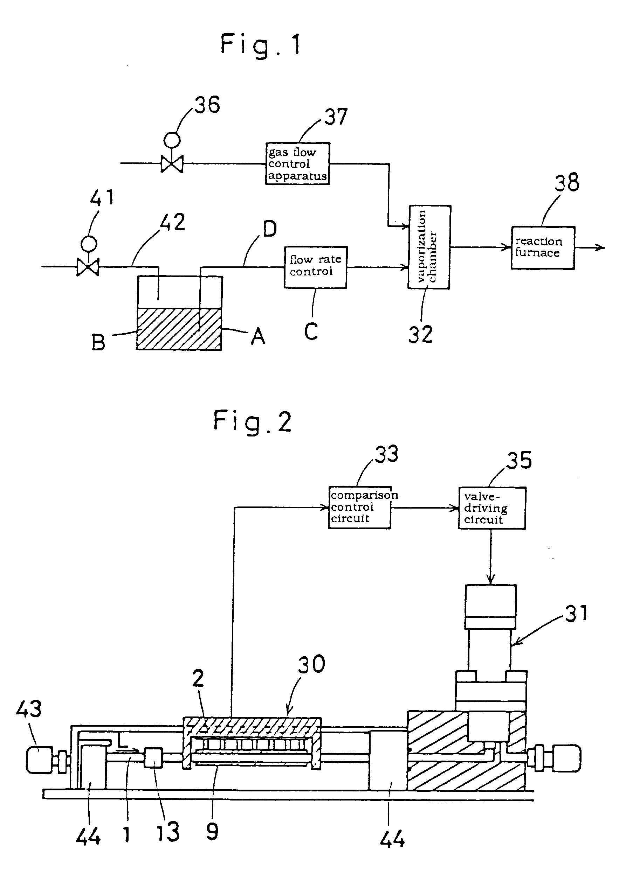

In Fig. 1, A designates a liquid tank containing a liquid source B, such as tetraethoxysilane Si(OC₂H₅)₄ of alcoholate series as a coating material of a semiconductor element and silane tetrachloride SiCl₄ as a raw material for optical fibers.

A means for supplying the liquid from the liquid tank A, for example a valve 41 disposed in a gas supply pipe 42, can be opened to pressurize the inside of the liquid tank A by an inert gas, such as nitrogen and argon, whereby liquid from the liquid source B is discharged to a liquid flow rate control portion C arranged in a supply passage D from said liquid tank A. In addition, a pump or a potential energy may be used for discharging this liquid.

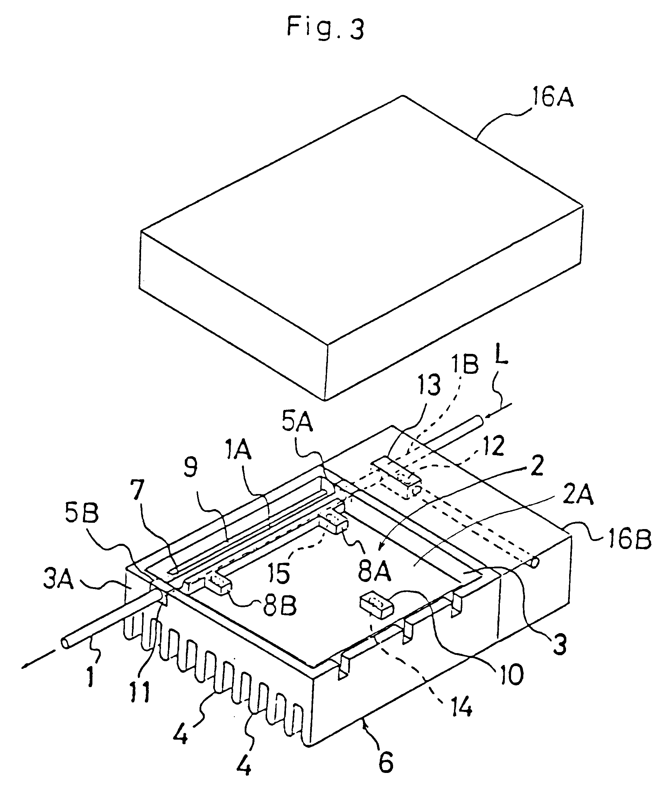

The liquid flow rate control portion C is provided with a flow meter 30 and a valve 31 arranged downstream of said flow meter 30, as shown in Fig. 2. Said flow meter 30 is constructed, as shown in Figs. 3 to 5. A tube 1 formed of stainless steel having an outside diameter of 2.0 mm and an inside diameter of 1.9 mm is supported by a pair of support blocks 44 and the liquid from said liquid tank A flows through this tube 1 in the direction of an arrow L from a coupling 43 disposed at a left end of the tube 1.

Reference numeral 2 designates an electronic cooling element for cooling a part of said tube 1. This electronic cooling element 2 is housed in a concave portion 3 of a heat sink 6 which is made for example of aluminum. Said heat sink 6 is provided with said concave portion 3 formed on one side thereof (upper side in the illustrated example). A large number of fins 4 are provided on the other side (lower side) of said heat sink 6 and notched portions 5A, 58 are formed on opposite sides of circumferential walls 3A surrounding the concave portion 3.

The electronic cooling element 2 comprises a tube holder 9 which is provided with a groove 7 having a shape corresponding to the outside surface of the tube 1. This groove 7 is recessed in the upper surface of the tube holder 9 and element holders 8A, 8B are extending from one side thereof. An element holder 10 is positioned at an appointed distance to said tube holder 9 and mounted on an upper surface 2A of said electronic cooling element 2, as shown in Fig. 3. These element holders 9, 10 are made of aluminum, copper or the like with high thermal conductivity and are closely mounted on said upper surface 2A.

The tube 1 is closely secured on the surface of said groove 7 between the notched portions 5A and 5B. A portion 1A of said tube 1 which is engaged with the groove 7 is cooled by means of the electronic cooling element 2. In this case, a thermal conducting compound or a silver paste is filled in a region where said portion 1A is brought into close contact with the groove 7 to achieve a high thermal conduction between the portion 1A to be cooled and the electronic cooling element 2. This compound or silver paste is further inserted to prevent vibrations. Reference numeral 11 designates a thermal insulating material for filling up the gaps around the tube 1 in the notched portions 5A, 5B of the heat sink 6.

Reference numeral 12 designates a first temperature-detecting element for detecting the temperature of a non-cooled portion 1B upstream of the portion 1A to be cooled. This temperature-detecting element 12 is fastened on the surface of the tube 1 through an element holder 13 made of the same material as said holders 9, 10. Reference numeral 14 designates a second temperature-detecting element secured on the element holder 10 for detecting the temperature of the electronic cooling element 2.

Reference numeral 15 designates a third temperature-detecting element fastened on an element holder 8A upstream of the tube holder 9 for detecting the temperature of the portion 1A cooled by means of the electronic cooling element 2. In addition, this third temperature-detecting element 15 may be mounted on an element holder 88 downstream of the element holder 8A as well. Further, reference numerals 16A, 16B designate thermal insulating materials produced for example of a foamed polystyrene for covering the portion 1A, the upper surface 2A of the electronic cooling element 2 and the first temperature-detecting element 12. In addition, these thermal insulating materials 16A, 16B may be integrally formed.

In Fig. 2 the thermal insulating materials 16A, 16B are not shown.

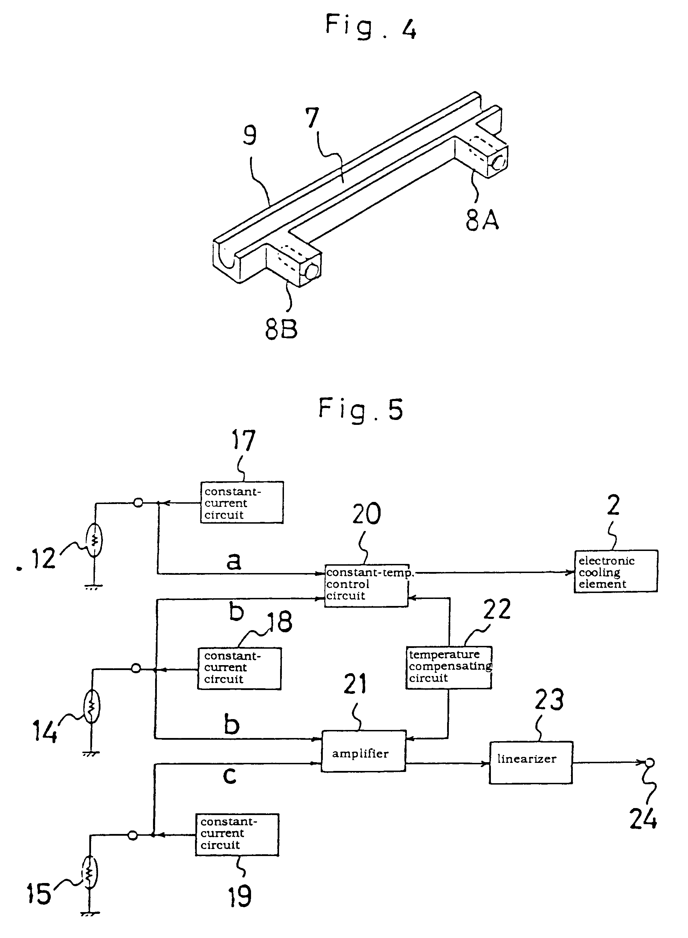

Fig. 5 is a block diagram of an electric system including the above described electronic cooling element 2 and the temperature-detecting elements 12, 14, 15. Referring to Fig. 5, reference numerals 17, 18, 19 designate constant-current circuits for constant-current controlling the temperature-detecting elements 12, 14, 15, respectively. Reference numeral 20 is designating a constant-temperature control circuit for controlling the electronic cooling element 2 on the basis of the temperature "a" detected by the First temperature-detecting element 12 and the temperature "b" detected by the second temperatue-detecting element 14, whereby controlling a difference "a" - "b" between said both detected temperatures "a" and "b" so that it is kept at an appointed value. Reference numeral 21 is designating an amplifier amplifying the difference between the temperature "c" detected by the third temperature-detecting element 15 and the temperature "b" detected by the second temperature-detecting element 14. Reference numeral 22 is designating a temperature compensating circuit. Whereas reference numeral 23 designates a linearizer, and reference numeral 24 is designating an output terminal.

In the flow meter 30 having the above described construction an electric current having an appointed magnitude (for example 0.3 mA) is passed through the respective temperature-detecting elements 12, 14, 15 via the respective constant-current circuits 17 18, 19. The electronic cooling element 2 is controlled by means of for example a constant-temperature PID (Proportional Integral and Differential) control circuit 20 so that the difference "a" - "b" between the temperature "a" detected by the first temperature-detecting element 12 and the temperature"b" detected by the second temperature-detecting element 14 is kept at the appointed value (for example 8°C).

Under this condition, if the fluid is not flowing through the tube 1, the electronic cooling element 2 shows the same one temperature all over the surface 2A, so that the temperature "c" detected by said third temperature-detecting element 15 is equal to the temperature "b" detected by the second temperature-detecting element 14, consequently the difference "c" - "b" amounts to zero. And, if the fluid is flowing through the tube 1 in direction of the arrow L the temperature "c" detected by said third temperature-detecting element 15 proportionally increases with the flow rate of said fluid. Accordingly, the difference "c" - "b" amounts to a temperature value between said two detected temperatures "b" and "c". Therefore, the flow rate of the fluid flowing through the tube 1 can be determined by obtaining said difference "c" - "b"so that the above described difference "a" - "b" can be kept at said appointed value.

However, the flow rate-output characteristics are determined by the construction and arrangement of the flow meter and the distance from the liquid inlet to the temperature-detecting element 15 in the portion 1A to be cooled. And, in the above described preferred embodiment, as to the measurement of very small flow rate, a more sensitive output is available by positioning of said third temperature-detecting element 15 closer to the notched portion 5A This third temperature-detecting element 15 can be provided anywhere between said two element holders 8A and 8B including said element holders 8A, 8B. That is to say, the position of the temperatue-detecting element 15 is variously selected according to the measurement range. In addition, the temperature-detecting elements 12, 14 and 15 may be disposed at the previously selected several points and any one of them may be selectively used according to the measurement range. It is obvious to use a plurality of element holders.

The present invention is not limited to the above described preferred embodiment. For example, a linear thermistor, a platinum thermometer, a resistance thermometer element, a coil, a thermocouple and the like may be used as the temperature-detecting elements 12, 14, 15. In addition, the tube 1 can be produced of metallic materials, such as aluminum, copper and nickel, in addition to stainless steel. In the case where the wall-thickness of the tube 1 is reduced, it may be made of fluoroethylene resins, polymers and the like.

In addition, the flow meter according to the present invention is usable also for the measurement of the flow rate of gases such as air, argon or corrosive gases.

Said valve 31 may be a valve provided with a valve body-driving member comprising a piezostack as disclosed in Japanese Patent Laid-Open No. Sho 62-13884.

A flow rate output signal from said flow meter 30 is compared with a preliminarily adjusted set signal by means of a comparison control circuit 33 the output of which is supplied to a valve-driving circuit 35 so that both of these signals can coincide with one another and control the opening of said valve 31, thereby discharging the liquid to a vaporization chamber 32 with an adjusted flow rate.

The vaporization chamber 32 is kept on a predetermined or higher temperature so that the liquid discharged through said liquid flow rate control portion C can be sufficiently vaporized. The liquid is vaporized in the vaporization chamber 32. A switching valve 36 is operatable to supply a carrier gas, such as nitrogen, argon hydrogen and oxygen, controlled by means of a gas flow rate control apparatus 37 (for example a mass flow controller disclosed in Japanese Patent Laid-Open No. Sho 62-13884) to the vaporization chamber 32 and the above described vaporized liquid is discharged to for example a reaction furnace 38 by this carrier gas.

As above described, according to the present preferred embodiment, the liquid supply is controlled in flow rate under the liquid condition and then the liquid is vaporized, so that a comparatively large flow rate of gas converting into a vaporized liquid flow rate can be stably supplied.

According to the present invention, not only the flow rate of the liquid flowing through the tube can be determined in a contactless manner and a very small flow rate of the liquid can be determined but also the tube, through which the fluid passes, is cooled by means of the electronic cooling element, so that no bubbles are generated. Thus the measurement of liquids which can generate gases, such as low boiling point liquid, is possible. In addition, the measurement is not influenced by gases dissolved in the fluid and merely the temperature difference resulting from the fluid flow that is the rise of the temperature of the fluid, is detected to prevent the measurement from being influenced by the assembling position of the flow meter, so that the high-precision measurement is possible.

Consequently, a stable and sure controlling of the fluid flow rate is possible.

## Claims

1. A method for measuring a flow rate of a fluid which passes through a tube which is cooled by means of an electronic cooling element, the method comprising the steps of measuring a first temperature ("a") of a surface (1A) of said cooled tube (1) upstream of said cooled portion (1A); measuring a second temperature ("b") of a surface of said cooling element (2);
measuring a third temperature ("c") of a surface of the tube (1) cooled by means of said cooling element (2);
controlling said cooling element (2) electronically such that the difference between the first temperature ("a") and the second temperature ("b") is kept at an appointed value; and
measuring the flow rate passing through that tube (1) on the basis of the difference between the third temperature ("c") and the second temperature ("b").

2. A flow meter comprising a portion (1A) of a tube (1) through which a fluid passes, an electronic cooling element mounted on the tube (2), and a first (12) and a second temperature-detecting element (14), said cooling element (2) being an electronically controlled cooling element, said first temperature-detecting element (12) is mounted on a surface of said tube (1) upstream of said cooled portion (1A) of the tube (1), said second temperature-detecting element (14) is mounted on a surface of said cooling element (2), a third temperature-detecting element (15) is mounted on said surface of the tube (1) cooled by means of said cooling element (2), and the flow rate passing through said tube (1) is measured on the basis of the difference between the temperature ("c") detected by said third temperature-detecting element (15) and the temperature ("b") detected by said second temperature-detecting element (14) and in that said cooling element (2) is controlled electronically such that the difference between the temperature ("a") detected by said first temperature-detecting element (12) and the temperature ("b") detected by the second temperature-detecting element (14) is kept at an appointed value.

3. An apparatus for controlling a flow rate of a liquid comprising a liquid tank (A), means (41) for discharging the liquid (B) from said liquid tank (A), a flow meter (30) disposed in a passage (D) from said liquid tank (A) and a valve (31), comprising an electronic cooling element (2) associated with said flow meter (30) for cooling a portion (1A) of a tube (1), through which the liquid (B) passes, a first temperature-detecting element (12) mounted on a surface of said tube (1) upstream of said cooled portion (1A) of said tube (1), a second temperature-detecting element (14) mounted on a surface of said cooling element (2), a third temperature-detecting element (15) mounted on said surface of the tube (1) cooled by means of said cooling element (2), wherein the flow rate of the llquid (B) passing through said tube (1) is determined on the basis of the difference between the temperature ("c") detected by said third temperature-detecting element (15) and the temperature ("b") detected by said second temperature-detecting element (14) and said cooling element (2) is controlled electronically such that the difference between the temperature ("a") detected by said first temperature-detecting element (12) and the temperature ("b") detected by said second temperature-detecting element (14) is kept at an appointed value, and the opening of said valve (31) is controlled by a signal from said flow meter (30) to supply the liquid (B) in an appointed flow rate.

4. A flow meter (30) according to claim 2, **characterized in** that said first to third temperature-detecting elements (12. 14, 15) are linear thermistors, platinum thermometers, resistance thermometer elements, coils or thermocouples.

5. A flow meter (30) according to claim 2 or 4, **characterized in** that said tube (1) is made of aluminum, copper, nickel, stainless steel, fluoroethylene resin or polymer.

6. An apparatus according to claim 3, **characterized by** an electric system comprising:
- first to third constant-current circuits (17, 18, 19) for constant-current controlling said first to third temperature-detecting elements (12, 14, 15),
- a constant-temperature control circuit (20) connected to the first and second temperature-detecting elements (12, 14) and to said cooling element (2) for controlling said cooling element,
- an amplifier (21) connected to the second and third temperature-detecting elements (14, 15),
- a linearizer (23) connected to said amplifier (21) and to an output terminal (24), and
- a temperature compensating circuit (22) coupling both of said constant-temperature control circuit (20) and said amplifier (21).

7. An apparatus according to claim 3 or 6, **characterized by** a comparison control circuit (33) linked to said flow meter (30) for comparing the flow rate output signal with a preliminarily adjusted set signal to control the opening of said valve (31) via a valve-driving circuit (35).

## Patentansprüche

1. Verfahren zum Messen eines Flüssigkeitsdurchflusses durch eine mittels eines elektronischen Kühlelements gekühlten Röhre, mit den Schritten
Messen einer ersten Temperatur ("a") einer Oberfläche (1A) der gekühlten Röhre (1) stromauf von dem gekühlten Bereich (1A);
Messen einer zweiten Temperatur ("b") einer Oberfläche des Kühlelements (2);
Messen einer dritten Temperatur ("c") auf einer Oberfläche der durch das Kühlelement (2) gekühlten Röhre (1);
elektronisches Steuern des Kühlelements (2), so daß die Differenz zwischen der ersten Temperatur ("a") und der zweiten Temperatur ("b") auf einem bestimmten Wert gehalten wird; und
Messen des Durchflusses durch die Röhre (1) auf Basis der Differenz zwischen der dritten Temperatur ("c") und der zweiten Temperatur ("b").

2. Durchflußmesser mit einem Bereich (1A) einer von einer Flüssigkeit durchströmten Röhre (1), einem an der Röhre befestigten elektronischen Kühlelement (2) und einem ersten (12) und einem zweiten Temperaturmeßelement (14), wobei das Kühlelement (2) ein elektronisch gesteuertes Kühlelement ist, das erste Temperaturmeßelement (12) auf einer Oberfläche der Röhre (1) stromauf von dem gekühlten Bereich (1A) der Röhre (1) befestigt ist, das zweite Temperaturmeßelement (14) auf einer Oberfläche des Kühlelements (2) befestigt ist, ein drittes Temperaturmeßelement (15) auf der Oberfläche der durch das Kühlelement (2) gekühlten Röhre (1) befestigt ist, und wobei der durch die Röhre (1) gelangende Durchfluß auf Basis der Differenz zwischen der durch das dritte Temperaturmeßelement (15) bestimmten Temperatur ("c") und der durch das zweite Temperaturmeßelement (14) bestimmten Temperatur ("b") meßbar ist, und wobei das Kühlelement (2) elektronisch gesteuert ist, so daß die Differenz zwischen der durch das erste Temperaturmeßelement (12) gemessenen Temperatur ("a") und der durch das zweite Temperaturmeßelement (14) gemessenen Temperatur ("b") auf einem bestimmten Wert gehalten wird.

3. Vorrichtung zum Steuern eines Flüssigkeitsdurchflusses, mit einem Flüssigkeitstank (A), einer Einrichtung (41) zum Ablassen der Flüssigkeit (B) aus dem Flüssigkeitstank (A), einem in einem Durchlaß (D) von dem Flüssigkeitstank (A) angeordneten Durchflußmesser (30) und mit einem Ventil (31), mit einem mit dem Durchflußmesser (30) gekoppelten elektronischen Kühlelement (2) zum Kühlen eines Bereichs (1A) einer von der Flüssigkeit (B) durchströmten Röhre (1), einem auf einer Oberfläche der Röhre (1) stromauf von dem gekühlten Bereich (1A) der Röhre (1) befestigten ersten Temperaturmeßelement (12), einem auf einer Oberfläche des Kühlelements (2) befestigten Temperaturmeßelement (14), einem auf der Oberfläche der durch das Kühlelement (2) gekühlten Röhre (1) befestigten dritten Temperaturmeßelement (15), wobei der Durchfluß der durch die Röhre (1) strömenden Flüssigkeit (B) auf Basis der Differenz zwischen der durch das dritte Temperaturmeßelement (15) bestimmten Temperatur ("c") und der durch das zweite Temperaturmeßelement (14) bestimmten Temperatur ("b") bestimmt wird und das Kühlelement (2) elektronisch gesteuert wird, so daß die Differenz zwischen der durch das erste Temperaturmeßelement (12) gemessenen Temperatur ("a") und der durch das zweite Temperaturmeßelement (14) gemessenen Temperatur ("b") auf einem bestimmten Wertgehalten wird und die Öffnung des Ventils (31) durch ein Signal von dem Durchflußmesser (30) gesteuert wird, um die Flüssigkeit (B) mit einer bestimmten Fließrate zuzuführen.

4. Durchflußmesser (30) nach Anspruch 2, **dadurch gekennzeichnet,** daß die ersten bis dritten Temperaturmeßelemente (12, 14, 15) lineare Thermistoren, Platin-Thermometer, Widerstands-Thermometerelemente, Spulen oder Thermoelemente sind.

5. Durchflußmesser (30) nach Anspruch 2 oder 4, **dadurch gekenn****zeichnet**, daß die Röhre (1) aus Aluminium, Kupfer, Nickel, rostfreiem Stahl, Fluorethylen-Kunstharz oder Polymer hergestellt ist.

6. Vorrichtung nach Anspruch 3, **gekennzeichnet durch** ein elektrisches System mit:
- ersten bis dritten Konstantstromschaltungen (17, 18, 19) für eine Konstantstromsteuerung für die ersten bis dritten Temperaturmeßelemente (12, 14, 15),
- einer mit dem ersten und dem zweiten Temperaturmeßelement (12, 14) sowie mit dem Kühlelement (2) verbundenen Konstanttemperatur-Steuerungsschaltung (20) zum Steuern des Kühlelements,
- einem mit dem zweiten und dem dritten Temperaturmeßelement (14, 15) verbundenen Verstärker (21),
- einem mit dem Verstärker (21) und einem Ausgangsanschluß (24) verbundenen Linearisierer (23), und mit
- einer die Konstanttemperatur-Steuerungsschaltung (20) und den Verstärker (21) koppelnden Temperaturkompensationsschaltung (22).

7. Vorrichtung nach Anspruch 3 oder 6, **gekennzeichnet durch** eine mit dem Durchflußmesser (30) verbundene Vergleichssteuerungsschaltung (33) zum Vergleichen des Durchfluß-Ausgangssignals mit einem vorher eingestellten Sollsignal zum Steuern der Öffnung des Ventils (31) über eine Ventiltreiberschaltung (35).

## Revendications

1. Procédé de mesure du débit d'un fluide traversant un tube qui est refroidi à l'aide d'un élément de refroidissement électronique, comportant les étapes consistant à :
mesurer une première température ("a") d'une surface (1A) dudit tube refroidi (1) en amont de ladite partie refroidie (1A) ;
mesurer une seconde température ("b") d'une surface dudit élément de refroidissement (2) ;
mesurer une troisième température ("c") d'une surface du tube (1) refroidie à l'aide dudit élément de refroidissement (2) ;
commander ledit élément de refroidissement (2) électroniquement de telle sorte que la différence entre la première température ("a") et la seconde température ("b") soit maintenue à une valeur déterminée; et
mesurer le débit traversant ce tube (1) en fonction de la différence entre la troisième température ("c") et la seconde température ("b").

2. Débitmètre comportant une partie (1A) d'un tube (1) traversé par un fluide, un élément de refroidissement électronique monté sur le tube (2), et un premier (12) ainsi qu'un second élément de détection de température (14), ledit élément de refroidissement (2) étant un élément de refroidissement commandé électroniquement, ledit premier élément de détection de température (12) est monté sur une surface dudit tube (1) en amont de ladite partie refroidie (1A) du tube (1), ledit second élément de détection de température (14) est monté sur une surface dudit élément de refroidissement (12), un troisième élément de détection de température (15) est monté sur ladite surface du tube (1) refroidie au moyen dudit élément de refroidissement (2), et le débit traversant ledit tube (1) est mesuré en fonction de la différence entre la température ("c") détectée par ledit troisième élément de détection de température (15) et la température ("b") détectée par ledit second élément de détection de température (14) et en ce que ledit élément de refroidissement (2) est commandé électroniquement de telle sorte que la différence entre la température ("a") détectée par ledit premier élément de détection de température (12) et la température ("b") détectée par ledit second élément de détection de température (14) soit maintenue à une valeur déterminée.

3. Dispositif de commande d'un débit d'un liquide comportant un réservoir de liquide (A), des moyens (41) pour refouler le liquide (B) depuis ledit réservoir de liquide (A), un débitmètre (30) disposé dans un passage (D) depuis ledit réservoir de liquide (A) et une soupape (31), comportant un élément de refroidissement électronique (2) associé audit débitmètre (30) pour refroidir une partie (1A) d'un tube (1), traversée par le liquide (B), un premier élément de détection de température (12) monté sur une surface dudit tube (1) en amont de ladite partie refroidie (1A) dudit tube (1), un second élément de détection de température (14) monté sur une surface dudit élément de refroidissement (2), un troisième élément de détection de température (15) monté sur ladite surface du tube (1) refroidie par ledit élément de refroidissement (2), le débit du liquide (B) traversant ledit tube (1) étant déterminé en fonction de la différence entre la température ("c") détectée par ledit troisième élément de détection de température (15) et la température ("b") détectée par ledit second élément de détection de température (14), et ledit élément de refroidissement (2) est commandé électroniquement de telle sorte que la différence entre la température ("a") détectée par ledit premier élément de détection de température (12) et la température ("b") détectée par ledit second moyen de détection de température (14)soit maintenue à une valeur déterminée, et l'ouverture de ladite soupape (31) est commandée par un signal provenant dudit débitmètre (30) pour délivrer le liquide (B) selon un débit déterminé.

4. Débitmètre (30) selon la revendication 2, caractérisé en ce que lesdits premier à troisième éléments de détection de température (12, 14, 15) sont des thermistors linéaires, des thermomètres à platine, des éléments de thermomètre à résistance, des bobines ou des thermocouples.

5. Débitmètre (30) selon la revendication 2 ou 4, caractérisé en ce que ledit tube (1) est réalisé en aluminium, cuivre, nickel, acier inoxydable, résine ou polymère de fluoroéthylène.

6. Dispositif selon la revendication 3, caractérisé par un système électrique comportant :
- des premier à troisième circuits à courant constant (17, 18, 19) pour commander à courant constant lesdits premier à troisième éléments de détection de température (12, 14, 15),
- un circuit de commande à température constante (20) relié aux premier et second éléments de détection de température (12, 14) et audit élément de refroidissement (2) pour commander ledit élément de refroidissement,
- un amplificateur (21) relié aux second et troisième éléments de détection de température (14, 15),
- un élément de linéarisation (23) relié audit amplificateur (21) et à une borne de sortie (24), et
- un circuit de compensation de température (22) couplant ledit circuit de commande à température constante (20) et ledit amplificateur (21).

7. Dispositif selon la revendication 3 ou 6, caractérisé par un circuit de commande de comparaison (33) relié audit débitmètre (30) pour comparer le signal de sortie de débit à un signal de consigne préalablement réglé pour commander l'ouverture de ladite soupape (31) par l'intermédiaire d'un circuit de commande de soupape (35).
